# EUROPEAN PATENT APPLICATION

(11) **EP 4 806 683 A1**
(43) Date of publication of application: **16.09.2026**
(21) Application number: 26163169.1
(22) Date of filing: 09.03.2026
(51) Int. Cl.: B60K 1/00, B60K 1/04, B60K 5/00, B60K 13/04, B60K 15/03, B60K 15/063, F01N 3/20

(54) **HYBRID ELECTRIC VEHICLE**

(30) Priority: 14.03.2025 JP 2025041213
(71) Applicant: Toyota Jidosha Kabushiki Kaisha, Toyota-shi, Aichi-ken 471-8571 (JP)
(72) Inventor: NAKAGAKI, Atsushi, Toyota-shi, Aichi-ken 471-8571 (JP)
(74) Representative: Winter, Brandl - Partnerschaft mbB

(57) **Abstract**

A hybrid electric vehicle includes a cabin, a center tunnel, a hydrogen engine, a generator, a battery, and a hydrogen tank. The center tunnel is provided in a central portion in a vehicle width direction of an underfloor region of the cabin. The center tunnel extends in a vehicle front-rear direction. The generator generates electric power when receiving power from the hydrogen engine. The battery stores electric power generated by the generator. The hydrogen tank stores hydrogen to be burned in the hydrogen engine. The battery is installed such that at least a part of the battery is located inside the center tunnel.

## Description

### CROSS-REFERENCE TO RELATED APPLICATIONS

This application is based upon and claims the benefit of priority from Japanese Patent Application No. 2025-041213, filed on March 14, 2025, the entire contents of which are incorporated herein by reference.

### BACKGROUND

### 1. Field

The present disclosure relates to a hybrid electric vehicle including a hydrogen engine.

### 2. Description of Related Art

JP2023-19927A discloses a hydrogen engine vehicle including a hydrogen tank in a rear portion of the vehicle.

When a hydrogen engine is used in a hybrid electric vehicle, extending the cruising range requires a large-capacity hydrogen tank. In addition, a hybrid electric vehicle needs to mount a higher-capacity battery than a conventional engine-powered vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a hybrid electric vehicle includes a cabin, a center tunnel, a hydrogen engine, a generator, a battery, and a hydrogen tank. The center tunnel is provided in a central portion in a vehicle width direction of an underfloor region of the cabin. The center tunnel extends in a vehicle front-rear direction. The generator generates electric power when receiving power from the hydrogen engine. The battery stores electric power generated by the generator. The hydrogen tank stores hydrogen to be burned in the hydrogen engine. The battery is installed such that at least a part of the battery is located inside the center tunnel.

Other features and aspects will be apparent from the following detailed description, the drawings, and the claims.

### BRIEF DESCRIPTION OF THE DRAWINGS

Fig. 1 is a diagram showing an arrangement of hydrogen tanks, a battery, and the like of a hybrid electric vehicle according to an embodiment as viewed from below the vehicle.
Fig. 2 is a diagram showing the arrangement of the hydrogen tanks, the battery, and the like of the hybrid electric vehicle of Fig. 1 as viewed from above the vehicle.
Fig. 3 is a cross-sectional view taken along line 3-3 of Fig. 2, illustrating the underfloor structure of the hybrid electric vehicle.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

In general, in a hybrid electric vehicle, both hydrogen tanks and a battery may be installed in an underfloor region of a cabin, for example, to provide a sufficient cabin space. In the underfloor region of the vehicle, components such as wheel suspension devices and an exhaust pipe of a hydrogen engine are also installed. Further, when the hydrogen tanks and the battery are mounted in the underfloor region, it is also necessary to consider the minimum ground clearance of the vehicle. Accordingly, installing a large-capacity battery in the underfloor region of the cabin may make it difficult to install large-capacity hydrogen tanks in the underfloor region of the cabin.

The hybrid electric vehicle of the present disclosure facilitates mounting of large-capacity hydrogen tanks and a large-capacity battery in the underfloor region of the cabin.

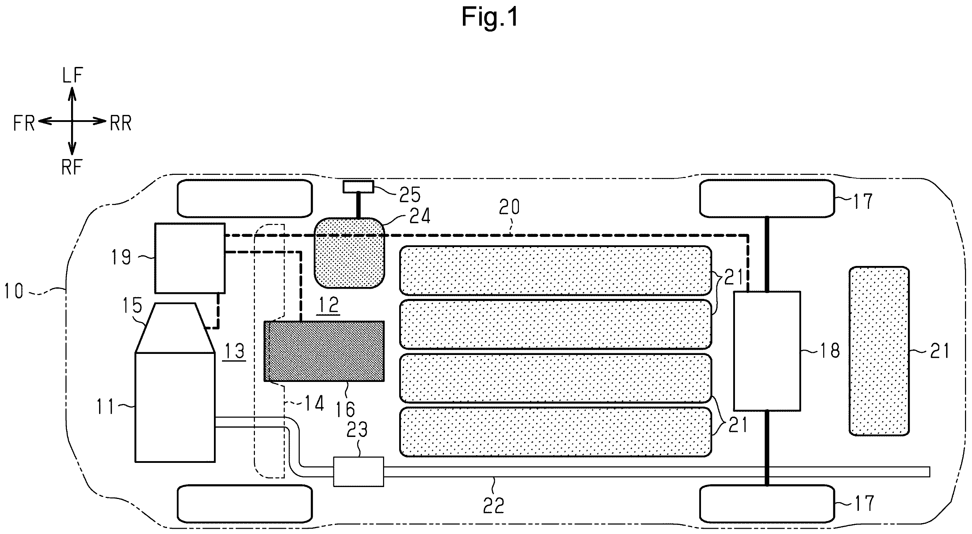

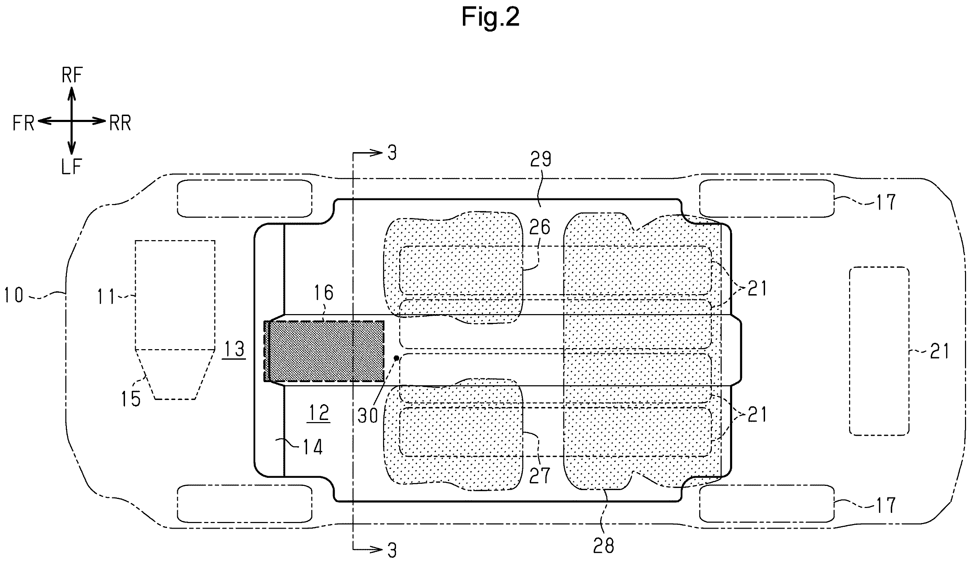

A hybrid electric vehicle according to an embodiment will now be described with reference to Figs. 1 and 2. A hybrid electric vehicle 10 of the present embodiment is configured as a series hybrid electric vehicle that employs a front-engine, rear-wheel-drive vehicle layout. Of the arrows shown in Figs. 1 and 2, FR indicates a front direction of the vehicle 10, RR indicates a rear direction of the vehicle 10, LF indicates a left direction of the vehicle 10, and RF indicates a right direction of the vehicle 10.

### Configuration of Drivetrain of the Hybrid Electric Vehicle 10

First, the configuration of a drivetrain of the hybrid electric vehicle 10 of the present embodiment will be described with reference to Fig. 1. A cabin 12 is provided inside the hybrid electric vehicle 10. The cabin 12 of the hybrid electric vehicle 10 is configured such that a passenger compartment, in which occupants are seated, and a cargo compartment, in which luggage is carried, form a continuous compartment; however, the passenger compartment and the cargo compartment may be configured as separate compartments. The hybrid electric vehicle 10 includes an engine compartment 13 in a portion forward of the cabin 12. The engine compartment 13 accommodates a hydrogen engine 11. A dashboard panel 14 is provided between the cabin 12 and the engine compartment 13 to separate the cabin 12 and the engine compartment 13 from each other.

The engine compartment 13 accommodates a generator 15 that generates electric power when receiving power of the hydrogen engine 11. An electric drive unit 18, which is supplied with electric power to drive rear wheels 17, is installed in a rear portion of the hybrid electric vehicle 10. The electric drive unit 18 is a unit in which a motor, a speed reduction mechanism, a differential mechanism, and the like are integrated. The electric drive unit 18 is coupled to the rear wheels 17. The hybrid electric vehicle 10 further includes a battery 16, which stores electric power generated by the generator 15. The generator 15, the battery 16, and the electric drive unit 18 are electrically connected to each other via a power control unit 19 installed in the engine compartment 13.

### Arrangement of Underfloor Structure of the Hybrid Electric Vehicle 10

The hybrid electric vehicle 10 is equipped with hydrogen tanks 21, which store hydrogen to be burned in the hydrogen engine 11. In the present embodiment, the hybrid electric vehicle 10 is provided with five hydrogen tanks 21.

A catalyst device 23 is installed on an exhaust pipe 22 of the hydrogen engine 11. The catalyst device 23 performs selective catalytic reduction of nitrogen oxides using urea water as a reducing agent. The hybrid electric vehicle 10 is equipped with a urea water tank 24 for storing urea water to be added to the exhaust gas flowing into the catalyst device 23. In the present embodiment, a resin tank is employed as the urea water tank 24.

The hybrid electric vehicle 10 of the present embodiment is configured such that the battery 16, the hydrogen tanks 21, and the urea water tank 24 are mounted in an underfloor region of the cabin 12. Four of the five hydrogen tanks 21 are installed side by side in the vehicle width direction in a portion of the underfloor region of the cabin 12 that is forward of the electric drive unit 18. The remaining one hydrogen tank 21 is installed in a portion of the underfloor region of the cabin 12 that is rearward of the electric drive unit 18. The battery 16 and the urea water tank 24 are installed in a portion of the underfloor region of the cabin 12 that is forward of the hydrogen tanks 21. Specifically, the battery 16 is installed in a central portion in the vehicle width direction in a portion of the underfloor region of the cabin 12 that is forward of the hydrogen tanks 21. In a portion of the underfloor region of the cabin 12 that is forward of the hydrogen tanks 21, the urea water tank 24 is installed to the left of the battery 16. A urea water inlet 25 for supplying urea water to the urea water tank 24 from outside the hybrid electric vehicle 10 is installed on the left side surface of the hybrid electric vehicle 10.

A high-voltage cable 20 is installed in the underfloor region of the cabin 12. The high-voltage cable 20 extends from the battery 16 to the electric drive unit 18 via the power control unit 19. The high-voltage cable 20 is routed through a portion of the underfloor region of the cabin 12 that is to the left of the battery 16 and the hydrogen tanks 21. The exhaust pipe 22 of the hydrogen engine 11, on which the catalyst device 23 is installed, extends in the front-rear direction through a portion of the underfloor region of the cabin 12 that is to the right of the battery 16 and the hydrogen tanks 21.

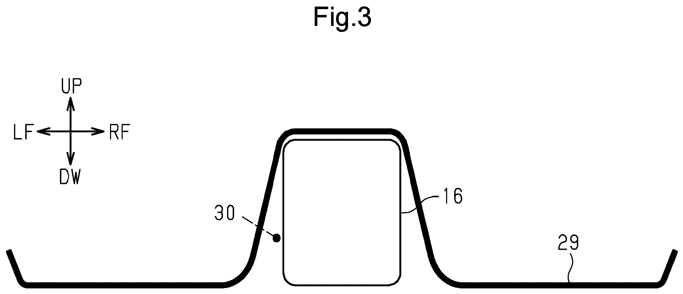

Fig. 2 shows the arrangement of the battery 16 and the hydrogen tanks 21 of the hybrid electric vehicle 10 as viewed from above. Fig. 3 is a cross-sectional view taken along line 3-3 of Fig. 2, illustrating the underfloor structure of the hybrid electric vehicle 10. A driver's seat 26 and a front passenger seat 27 are installed in a front portion of the cabin 12 with a gap therebetween in the vehicle width direction, and a rear seat 28 is installed at a position rearward of the driver's seat 26 and the front passenger seat 27. A floor panel 29, which forms the floor surface of the cabin 12, includes a floor tunnel in a central portion in the vehicle width direction. The floor tunnel protrudes upward with respect to portions on the opposite sides. Accordingly, a center tunnel 30 is formed in the underfloor region of the cabin 12. The center tunnel 30 extends in the vehicle front-rear direction through a central portion in the vehicle width direction; that is, a portion between the driver's seat 26 and the front passenger seat 27. In the hybrid electric vehicle 10 of the present embodiment, the battery 16 is installed inside the center tunnel 30.

### Operation of the Embodiment

In a conventional engine-powered vehicle employing a front-engine, rear-wheel-drive vehicle layout, a propeller shaft is installed in a center tunnel to transmit power from an engine installed in a front portion of the vehicle to the rear wheels. In the hybrid electric vehicle 10 of the present embodiment, a front-engine, rear-wheel-drive vehicle layout is achieved by installing the hydrogen engine 11 for electric power generation in the front portion of the vehicle 10 and installing the electric drive unit 18 in the rear portion of the vehicle 10. The electric drive unit 18 is supplied with electric power and drives the rear wheels 17. Since the hybrid electric vehicle 10 does not require a propeller shaft, the battery 16 can be installed within the center tunnel 30.

When the battery 16 is installed in a portion of the underfloor region of the cabin 12 other than the center tunnel 30, the vertical dimension of the battery 16 is limited due to constraints imposed by a minimum ground clearance of the hybrid electric vehicle 10. If the capacity of the battery 16 is increased without increasing the vertical dimension, the battery 16 is increased in size in the vehicle front-rear direction and the vehicle width direction. In such a case, the battery 16 occupies a substantial portion of the underfloor space of the cabin 12, thereby reducing an installation space for the hydrogen tank 21 in the underfloor region of the cabin 12. In contrast, in the hybrid electric vehicle 10 of the present embodiment, the battery 16 is installed within the center tunnel 30. Accordingly, as compared with a case in which the battery 16 is installed in a portion of the underfloor region of the cabin 12 other than the center tunnel 30, the vertical dimension of the battery 16 can be increased. As a result, increases in the size of the battery 16 in the vehicle front-rear direction and the vehicle width direction associated with increasing capacity can be suppressed, thereby facilitating providing an installation space for the hydrogen tank 21 in the underfloor region of the cabin 12.

### Advantages of the Embodiment

The hybrid electric vehicle 10 of the present embodiment, configured as described above, provides the following advantages.
(1) The hybrid electric vehicle 10 of the present embodiment is provided with the center tunnel 30, which extends in the vehicle front-rear direction and is provided at the center in the vehicle width direction center in the underfloor region of the cabin 12. The hybrid electric vehicle 10 includes the hydrogen engine 11, the generator 15, which generates electric power when receiving power from the hydrogen engine 11, the battery 16, which stores the electric power generated by the generator 15, and the hydrogen tank 21, which stores hydrogen to be combusted by the hydrogen engine 11. The hybrid electric vehicle 10 is configured such that the battery 16 is installed so as to be positioned inside the center tunnel 30. By installing the battery 16 inside the center tunnel 30, a decrease in the installation space of the hydrogen tank 21 due to an increase in the capacity of the battery 16 is suppressed. This allows for an increase in the capacity of the battery 16 and the capacity of the hydrogen tank 21. As described above, the hybrid electric vehicle 10 of the present embodiment facilitates mounting of a large-capacity hydrogen tank 21 and a large-capacity battery 16 in the underfloor region of the cabin 12.
(2) In the hybrid electric vehicle 10 of the present embodiment, the hydrogen tank 21 is installed in a portion of the underfloor region of the cabin 12 that is rearward of the battery 16. The hydrogen engine 11 and the generator 15 are installed in the engine compartment 13, which is provided forward of the cabin 12. This structure optimizes the arrangement of the hydrogen engine 11, the generator 15, the battery 16, and the hydrogen tank 21.
(3) In the hybrid electric vehicle 10 of the present embodiment, the electric drive unit 18, which is supplied with electric power from the battery 16 and drives the rear wheels 17 of the hybrid electric vehicle 10, is mounted on the rear portion of the vehicle 10. In such a hybrid electric vehicle 10, a front-engine, rear-wheel-drive vehicle layout is achieved even if a propeller shaft for transmitting the power of the hydrogen engine 11 to the rear wheels 17 is not installed inside the center tunnel 30. This structure allows the battery 16 to be mounted inside the center tunnel 30.
(4) The high-voltage cable 20 is installed in a portion of the underfloor region of the cabin 12 that is to the left of the battery 16 and the hydrogen tanks 21. The high-voltage cable 20 extends from the battery 16 to the electric drive unit 18 via the power control unit 19. On the other hand, the exhaust pipe 22 of the hydrogen engine 11 is installed in a portion of the underfloor region of the cabin 12 that is to the right of the battery 16 and the hydrogen tanks 21. As described above, the exhaust pipe 22 of the hydrogen engine 11 and the high-voltage cable 20 are installed in the underfloor region of the cabin 12 of the hybrid electric vehicle 10 of the present embodiment so as to be located on the opposite sides of the battery 16 in the vehicle width direction. Since the high-voltage cable 20 is installed at a place away from the exhaust pipe 22, through which high-temperature exhaust gas flows, the high-voltage cable 20 is protected from thermal damage caused by the exhaust gas.
(5) The catalyst device 23 is provided in the exhaust pipe 22 of the hydrogen engine 11 mounted on the hybrid electric vehicle 10 according to the present embodiment. The catalyst device 23 performs selective catalytic reduction of nitrogen oxides using urea water as a reducing agent. The hybrid electric vehicle 10 includes the urea water tank 24, which stores urea water, and the urea water inlet 25 for supplying urea water to the urea water tank 24 from the outside of the vehicle 10. The urea water inlet 25 is provided on the left side surface of the hybrid electric vehicle 10. The urea water tank 24 is installed in a portion of the underfloor region of the cabin 12 that is forward of the hydrogen tanks 21 and to the left of the battery 16. In other words, in the hybrid electric vehicle 10 of the present embodiment, the urea water tank 24 is installed in a portion of the underfloor region of the cabin 12 that is forward of the hydrogen tank 21 and to the side of the battery 16. The urea water inlet 25 is provided on one of the lateral side surfaces of the hybrid electric vehicle 10, the one side surface being on the same side as the urea water tank 24 with respect to the battery 16. In a comparative arrangement, the urea water inlet 25 is provided on a side surface of the hybrid electric vehicle 10 that is opposite, with respect to the battery 16, the side on which the urea water tank 24 is disposed. In this case, a pipe connecting the urea water inlet 25 to the urea water tank 24 needs to be installed to cross the underfloor region of the cabin 12, and the pipe may limit the installation space of the battery 16 and the hydrogen tanks 21. In contrast, in the hybrid electric vehicle 10 of the present embodiment, both the urea water tank 24 and the urea water inlet 25 are installed on the left side portion of the hybrid electric vehicle 10. Accordingly, the installation space for the battery 16 and the hydrogen tanks 21 in the underfloor region of the cabin 12 is unlikely to be limited by the pipes connecting the urea water tank 24 and the urea water inlet 25.
(6) The urea water tank 24 is installed in a portion of the underfloor region of the cabin 12 that is to the left of the battery 16, and the exhaust pipe 22 of the hydrogen engine 11 is installed in a portion of the underfloor region of the cabin 12 that is to the right of the battery 16. Thus, in the hybrid electric vehicle 10 of the present embodiment, the urea water tank 24 and the exhaust pipe 22 are spaced apart in the vehicle width direction with the battery 16 disposed therebetween in the underfloor region of the cabin 12. This arrangement shields the urea water tank 24 from heat generated by high-temperature exhaust gas flowing through the exhaust pipe 22.

### Other Embodiments

The above-described embodiment may be modified as follows. The above-described embodiment and the following modifications can be combined as long as the combined modifications remain technically consistent with each other.

The urea water tank 24 and the urea water inlet 25 may be provided at positions different from those in Fig. 1. For example, the urea water tank 24 may be installed to the right of the battery 16, and the urea water inlet 25 may be installed on the right side surface of the hybrid electric vehicle 10. Alternatively, the urea water inlet 25 may be provided on one of the lateral side surfaces of the hybrid electric vehicle 10 that is opposite from the urea water tank 24 with respect to the battery 16.

When the urea water tank 24 is made of a material resistant to heat, the urea water tank 24 may be installed, in the underfloor region of the cabin 12, on the same side as the side on which the exhaust pipe 22 is located among the lateral sides of the battery 16.

When the urea SCR system is not mounted, the hybrid electric vehicle 10 may omit the catalyst device 23, which performs selective catalytic reduction, the urea water tank 24, and the urea water inlet 25.

When other measures against heat damage are employed, the high-voltage cable 20 may be installed, and the high-voltage cable 20 may be disposed in the underfloor region of the cabin 12 on the same side of the battery 16 as the exhaust pipe 22.

The hydrogen tanks 21 may be disposed at positions and in orientations different from those in the case of the above-described embodiment as long as the hydrogen tanks 21 are disposed rearward of the battery 16 in the underfloor region of the cabin 12. Further, the number of the hydrogen tanks 21 may be changed. For example, one or more of the hydrogen tanks 21 may be disposed in a portion of the interior of the center tunnel 30 that is rearward of the battery 16. Further, a hydrogen tank 21 may be installed in a portion of the underfloor region of the cabin 12 that is different from a position rearward of the battery 16.

The position and orientation of the battery 16 inside the center tunnel 30 may be changed. Alternatively, a part of the battery 16 may be located inside the center tunnel 30, and the remaining part of the battery 16 may be located outside the center tunnel 30. It is sufficient that at least part of the battery 16 be installed within the center tunnel 30.

The layout of the seats of the hybrid electric vehicle 10 can be changed.

The hybrid electric vehicle 10 may be configured as a four-wheel drive vehicle in which the front wheels are driven by the power of the hydrogen engine 11. In this case, the generator 15 may also function as an electric motor that generates a driving force. Further, the hybrid electric vehicle 10 may be configured as a front-wheel-drive vehicle in which the electric drive unit 18 for driving the rear wheels 17 is omitted. In other words, the layout of the battery 16, the hydrogen tanks 21, and the like in the hybrid electric vehicle 10 of the above-described embodiment and modifications can be employed in any hybrid electric vehicle that does not use the power of the hydrogen engine 11 installed in the front portion of the vehicle to drive the rear wheels 17. In such a hybrid electric vehicle, it is not necessary to install, inside the center tunnel 30, a power transmission mechanism such as a propeller shaft that transmits power to the rear wheels 17, and it is therefore possible to install the battery 16 inside the center tunnel 30.

The hybrid electric vehicle 10 may be configured as a vehicle that employs a vehicle layout of a rear engine in which the engine compartment 13 is provided rearward of the cabin 12. In this case, the hydrogen engine 11 and the generator 15 are installed in the engine compartment 13.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hybrid electric vehicle (10), comprising:
a cabin (12);
a center tunnel (30) provided in a central portion in a vehicle width direction of an underfloor region of the cabin (12), the center tunnel (30) extending in a vehicle front-rear direction;
a hydrogen engine (11);
a generator (15) that generates electric power when receiving power from the hydrogen engine (11);
a battery (16) that stores electric power generated by the generator (15); and
a hydrogen tank (21) that stores hydrogen to be burned in the hydrogen engine (11),
wherein the battery (16) is installed such that at least a part of the battery (16) is located inside the center tunnel (30).

2. The hybrid electric vehicle (10) according to claim 1, wherein the hydrogen tank (21) is installed in a portion of underfloor region of the cabin (12) that is rearward of the battery (16).

3. The hybrid electric vehicle (10) according to claim 1 or 2, wherein the hydrogen engine (11) and the generator (15) are installed in an engine compartment (13) provided in a portion forward of the cabin (12).

4. The hybrid electric vehicle (10) according to any one of claims 1 to 3, further comprising an electric drive unit (18) mounted in a rear portion of the vehicle (10),
wherein the electric drive unit (18) is supplied with electric power from the battery (16) to drive a rear wheel of the hybrid electric vehicle (10).

5. The hybrid electric vehicle (10) according to claim 4, further comprising:
a high-voltage cable connecting the battery (16) and the electric drive unit (18); and
an exhaust pipe (22) of the hydrogen engine (11),
wherein the high-voltage cable and the exhaust pipe (22) are installed with the battery (16) therebetween in the vehicle width direction.

6. The hybrid electric vehicle (10) according to any one of claims 1 to 5, further comprising:
a urea water tank (24) that stores urea water;
a catalyst device provided in an exhaust pipe (22) of the hydrogen engine (11) and performing selective catalytic reduction of nitrogen oxides using urea water as a reducing agent; and
a urea water inlet for supplying urea water to the urea water tank (24) from outside the vehicle (10), wherein
the urea water tank (24) is installed in a portion of the underfloor region of the cabin (12) that is forward of the hydrogen tank (21) and to a side of the battery (16), and
the urea water inlet is installed on one of the lateral side surfaces of the hybrid electric vehicle (10), the one side surface being on the same side as the urea water tank (24) with respect to the battery (16).

7. The hybrid electric vehicle (10) according to claim 6, wherein the urea water tank (24) is installed in a portion of the underfloor region of the cabin (12) such that the battery (16) is disposed between the urea water tank (24) and the exhaust pipe (22) in the vehicle width direction.
